# FASCICULE DE BREVET EUROPEEN

(11) **EP 1 695 789 B1**
(45) Date de publication et mention de la délivrance du brevet: **14.05.2008**
(21) Numéro de dépôt: 06110340.4
(22) Date de dépôt: 23.02.2006
(51) Int. Cl.: B23P 6/00, F01D 5/00, B23K 26/34

(54) **Procédé de réparation de disque aubagé monobloc, éprouvette de début et de fin campagne**
Verfahren zur Reparatur einer integral beschaufelten Rotorscheibe, Prüfling für den Anfang und das Ende des Verfahrens
Method of repairing an integrally bladed rotor disc, test piece for the beginning and the end of the procedure.

(30) Priorité: 25.02.2005 FR 0550518
(43) Date de publication de la demande: 30.08.2006
(73) Titulaire: SNECMA, 75015 Paris (FR); SNECMA SERVICES, 75015 Paris (FR)
(72) Inventeur: Bouet, Bernard, 77220, Gretz Armainvilliers (FR); Derrien, Gérard, 78800, Houilles (FR); Kerneis, Stéphane, Michel, 78140, Velizy (FR); Pagnon, Claude, André, Charles, 17640, Vaux sur Mer (FR); Pinto, Eric, Christian, Jean, 77930, Fleury en Bière (FR)
(74) Mandataire: David, Daniel

(56) Documents cités:
- EP-A- 0 504 095
- EP-A- 1 491 281
- DE-A1- 3 813 157
- US-A- 4 730 093
- US-A- 5 038 014
- US-B1- 6 269 540
- US-B1- 6 326 585
- US-B1- 6 568 077

## Description

La présente invention concerne le domaine des turbomachines, notamment aéronautiques, et vise la réparation de disques mobiles aubagés.

La présente invention concerne un procédé de réparation d'un disque aubagé monobloc de turbomachine selon le préambule de la revendication 1.
Le document US-A-5,038,014 décrit un tel procédé. L'invention concerne aussi des éprouvettes pour la mise en oeuvre du procédé.

Afin de répondre aux exigences accrues en performances des moteurs, on fabrique maintenant des roues ou disques aubagés monoblocs, désignés DAM, en alliage de titane pour compresseurs de turboréacteurs. Dans un rotor conventionnel, les aubes sont retenues par leur pied qui est monté dans un logement aménagé sur la jante du disque. Les disques et les aubes sont donc fabriqués séparément avant leur assemblage en un rotor aubagé. Dans un DAM, les aubes et le disque sont usinés directement dans une ébauche forgée ; ils ne forment qu'une seule pièce. Cette technique autorise des gains importants sur la masse totale du moteur mais aussi sur les coûts de fabrication. Les problèmes de fretting sur pieds d'aubes et alvéoles en service n'existent plus.

Cependant, ce type de rotor présente l'inconvénient d'être difficile à réparer. En fonctionnement, les aubes de compresseur peuvent subir des dommages dus aux impacts causés par l'absorption, par le moteur, de corps étrangers ou bien du fait de l'érosion provoquée par les poussières et autres particules entraînées par l'air passant à travers le moteur et venant en contact avec la surface des aubes. Ces usures ou dommages, s'ils ne sont réparables selon les critères de la documentation du constructeur, entraînent le remplacement d'une ou des aubes incriminées. Dans le cas de pièces aubagées monobloc, les aubes sont parties intégrantes d'une pièce massive et, contrairement aux montages conventionnels, elles ne peuvent être remplacées ou même démontées pour être réparées individuellement. Il faut pouvoir réparer la pièce directement sur le disque. La réparation doit alors prendre en compte l'intégralité de la pièce avec ses encombrements, son poids, dans le cas de grandes pièces, et l'accessibilité des zones à réparer.

Ainsi, pour un DAM les zones concernées généralement par la réparation sont, pour chaque aube, le sommet, le coin de pale côté bord d'attaque, le coin de pale côté bord de fuite, le bord d'attaque et le bord de fuite. Les aubes sont de conception dite à 3 dimensions, et présentent la particularité d'avoir une forme évolutive dans les trois directions et une épaisseur variable suivant ce profil évolutif. L'étendue maximale des zones pouvant être réparées tient compte de l'utilisation des moteurs et des charges aérodynamiques supportées par les pièces.

Les techniques de réparation qui ont été développées consistent à éliminer la zone endommagée sur les aubes détériorées, puis à remplacer la partie éliminée par une pièce de forme appropriée ou bien par rechargement de matière. Ces techniques mettent en oeuvre généralement un usinage conventionnel pour l'élimination de la partie endommagée, le contrôle sans contact de la pièce réparée, le grenaillage ultrason et un usinage spécifique pour la reprise de la zone réparée.

La présente invention concerne la réparation par rechargement de matière.

La réparation est particulièrement difficile à réaliser pour certains alliages utilisés dont le soudage entraîne la formation de défauts dans la masse. Il s'agit notamment de l'alliage de titane Ti17. Cet alliage est rapporté par exemple dans la demande de brevet EP1340832 de la Demanderesse portant sur un produit, tel qu'une aube, réalisé en cette matière. Lorsqu'il s'agit de procéder à un rechargement de matière, les techniques de type TIG ou de type à micro-plasma utilisées traditionnellement et couramment dans l'industrie aéronautique ne permettent pas de traiter le titane Ti17 dans des conditions permettant d'obtenir des résultats acceptables.

Ces rechargements conventionnels entraînent la formation de défauts. Ainsi le rechargement TIG, mettant en oeuvre une énergie importante au regard de la faible épaisseur en jeu, est générateur de déformations, et entraîne la formation d'un taux important de porosités, telles que des micro porosités ou micro soufflures, ainsi qu'une zone affectée thermiquement (ZAT) étendue. Ces micro porosités, qui sont très difficilement détectables, sont génératrices d'un abattement jusqu'à 80% en tenue mécanique. Un tel abattement n'est pas acceptable pour la tenue des pièces en fonctionnement, et ce type de soudage par rechargement ne peut être appliqué. Le rechargement micro-plasma entraîne la formation d'une ZAT plus faible mais encore relativement élevée. En outre, le procédé oblige à des attentions particulières et un contrôle périodique sur les équipements et produits utilisés afin qu'aucun paramètre de fonctionnement de la machine ne dérive et ne modifie les résultats attendus.

Le brevet US 6568077 décrit un procédé de réparation d'une aube sur un disque DAM selon lequel on usine la partie endommagée de l'aube puis, suivant un premier mode opératoire, on recharge la partie manquante par le dépôt de métal au moyen d'une machine de soudage à l'arc et électrode de tungstène, technique TIG. Suivant un second mode opératoire, on soude un insert au moyen d'une machine de soudage par faisceau d'électron. Le profil de l'aube est ensuite restauré par un usinage approprié. Ce procédé cependant ne mentionne pas le problème rencontré avec le soudage de certains alliages de titane.

La demanderesse a découvert que l'emploi d'une technique de rechargement par application d'un faisceau laser permettait d'obvier aux problèmes rencontrés par les techniques usuelles. En particulier, le rechargement par faisceau laser est apparu comme une technique permettant de minimiser les défauts dans la zone de soudage.

Le rechargement par faisceau laser est déjà connu et utilisé, par exemple, dans les applications où il s'agit de générer des contours métalliques, notamment à partir de données CAO. Les parois ont une épaisseur comprise entre 0,05 et 3 mm et les couches sont de 0,05 à 1 mm de hauteur. Il permet d'obtenir une excellente liaison métallurgique avec le substrat.

La technique de rechargement au moyen d'un faisceau laser présente les avantages suivants : l'apport de chaleur est constant dans le temps. La chaleur n'a pas le temps de s'emmagasiner dans la masse et de diffuser ; il s'ensuit un dégazage peu important dans le cas du titane et une limite de l'abattement en résistance. En outre la répétitivité et la fiabilité de cette technique sont bonnes, une fois les paramètres machine fixés ; son pilotage est aisé.

Les techniques laser employées actuellement mettent en oeuvre des actions simultanées d'apport de matériau et d'irradiation par faisceau laser du substrat. Le matériau est déposé généralement sur la zone de travail sous la forme d'une poudre ou d'un fil métallique. Selon d'autres réalisations, il est projeté sous la forme de jets de poudre vers la zone de travail à l'aide d'une buse adaptée.

L'invention a donc pour objet un procédé de réparation d'un disque aubagé monobloc mettant en oeuvre une technique de rechargement.

Conformément à l'invention, le procédé de réparation d'un disque aubagé monobloc de turbomachine comportant au moins une zone endommagée, par rechargement de métal de ladite zone endommagée au moyen d'une machine de soudage, comprenant les étapes de préparation de la zone endommagée, de rechargement en métal de la zone et de reprise par usinage de la zone réparée, est caractérisé par le fait que
l'étape de préparation comprend l'usinage de la zone endommagée de manière à obtenir une zone à réparer de profil déterminé,
on procède au rechargement d'une éprouvette, dite de début de campagne, présentant ledit profil déterminé, avec la machine de soudage qui est une machine de type laser et dont les paramètres de fonctionnement sont préétablis,
on vérifie la qualité de l'éprouvette après rechargement, et, dans l'hypothèse où la qualité de l'éprouvette correspond aux critères de réception de la réparation,
on recharge la zone à réparer avec la même machine de soudage sans en changer les paramètres de fonctionnement.

La présente invention présente l'avantage de permettre l'industrialisation de la réparation des disques aubagés monoblocs en se fondant sur la capacité de pilotage des installations de rechargement mettant en oeuvre le chauffage par un faisceau laser. Une fois que l'installation est validée et les paramètres établis, il suffit de vérifier par le traitement préalable d'une éprouvette que les paramètres sont corrects et n'ont pas dérivé. On a constaté avec surprise que cette méthode permettait avec une grande fiabilité de réparer des pièces aussi complexes que les DAM. Le contrôle préalable suffit pour autoriser le rechargement d'une pluralité d'aubes sur le même disque.

Conformément à une autre caractéristique, et pour s'assurer de manière complémentaire que l'opération s'est bien déroulée, le procédé comprend, après rechargement de la zone à réparer ou des différentes zones à réparer successives, une étape de rechargement d'une éprouvette dite de fin de campagne et de vérification de la qualité de l'éprouvette de fin de campagne.

Le procédé convient particulièrement bien lorsque le métal constituant le disque est un alliage de titane, notamment le Ti 17.

La nature du métal de rechargement n'est pas limitée, mais de préférence le métal de rechargement est un alliage de titane, notamment Ti17 ou TA6V.

Le procédé s'applique à au moins une zone à réparer parmi les sommets de pale, les coins de bord d'attaque ou de bord de fuite, et les bords d'attaque ou de fuite.

Conformément à une autre caractéristique, le procédé de réparation de disque aubagé monobloc comprend une étape de mise au point de l'installation de rechargement au cours de laquelle les paramètres sont préétablis par le rechargement d'une éprouvette de mise au point, suivi de contrôles non destructifs et destructifs de la qualité du rechargement effectué.

En particulier l'éprouvette de mise au point présente un profil correspondant à celui d'une zone à recharger de bord d'attaque ou de bord de fuite de pale dudit disque. Le contrôle comprend un essai de fatigue sur une éprouvette d'essai usinée dans l'éprouvette après l'étape de rechargement.

L'invention porte aussi sur l'éprouvette de début ou fin de campagne pour la mise en oeuvre du procédé. Elle est caractérisée par le fait qu'elle est constituée en alliage de titane dont la forme simule le sommet d'une pale avec léchette d'étanchéité.

L'invention porte aussi sur une éprouvette de début ou de fin de campagne pour la mise en oeuvre du procédé, constituée en alliage de titane dont la forme simule un coin de bord d'attaque ou de bord de fuite d'un sommet de pale usiné selon ledit profil prédéterminé.

On décrit maintenant plus en détail le procédé en référence aux dessins annexés sur lesquels :
- la figure 1 représente une vue partielle de disque aubagé monobloc,
- les figures 2a et 2b montrent une éprouvette de début ou de fin campagne utilisée lors de la mise en oeuvre du procédé de l'invention pour réparer des sommets de pale, vue de face et de profil,
- les figures 3a et 3b montrent une éprouvette de début ou de fin de campagne utilisée lors de la mise en oeuvre du procédé de l'invention pour réparer des coins de sommet de pale, vue de face et de profil,
- la figure 4 montre en coupe longitudinale une buse de rechargement par faisceau laser,
- la figure 5 montre une éprouvette de validation de tenue mécanique, utilisée lors de la mise au point d'une installation de rechargement par faisceau laser,
- la figure 6 montre l'éprouvette de la figure 5 après rechargement,
- la figure 7 montre la découpe d'une éprouvette pour les essais de fatigue cyclique dans l'éprouvette rechargée de la figure 6.

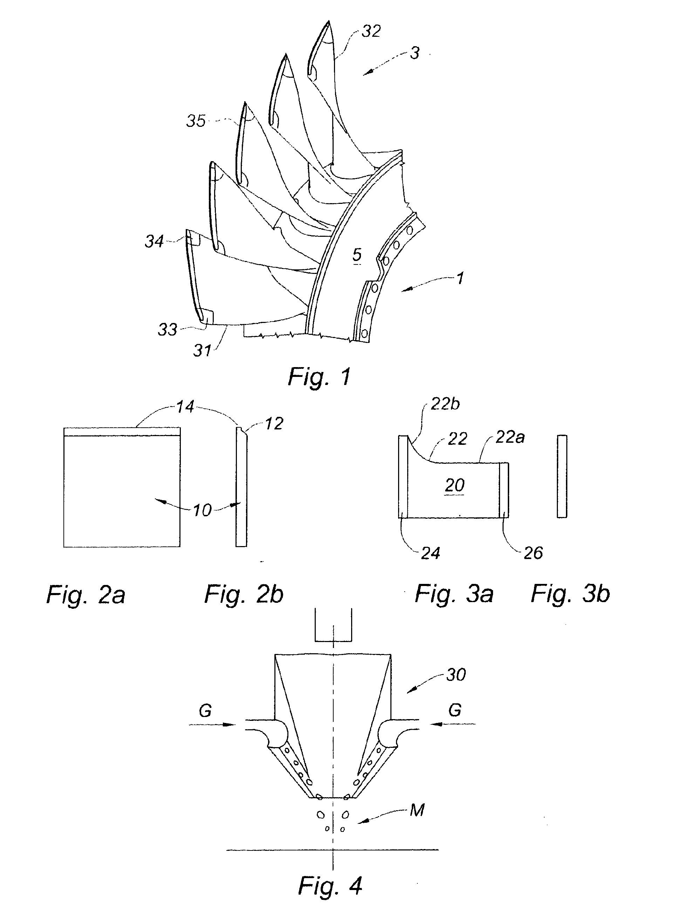

On voit sur la figure 1 une partie d'un disque aubagé monobloc 1. Les aubes 3 sont radiales et réparties à la périphérie d'un disque 5. L'ensemble est monobloc en ce sens qu'il a été fabriqué soit par usinage d'une ébauche unique, soit par soudage d'une partie au moins de ses composants. Les aubes en particulier ne sont pas liées au disque par des moyens mécaniques démontables. Les zones susceptibles d'être endommagées sont les bords d'attaque 31, les bords de fuite 32, les coins de bord d'attaque 33, les coins de bord de fuite 34 ainsi que la ligne du sommet de pale 35 pourvue d'une portion amincie formant léchette d'étanchéité comme cela est connu.

Les dommages que l'on constate dépendent de la position de la zone. En bord d'attaque, de fuite ou en coin de pale par exemple il peut s'agir d'une perte de matière causée par l'impact d'un objet étranger ou bien d'une crique. En sommet de pale, il s'agit le plus souvent d'une usure due aux frottements avec le carter du moteur. Pour des raisons économiques et industrielles, on souhaite standardiser les opérations de réparation de ces disques. Ainsi, après avoir vérifié si la réparation est possible, on procède à un usinage standardisé de la zone ou des zones endommagées. La décision de procéder ou non à la réparation dépend notamment de la taille ou de l'étendue du défaut relevé.

Selon la zone endommagée, on enlève une quantité de matière de telle façon que la géométrie, les dimensions et les cotes de la zone à réparer soient toujours les mêmes. Cette mise en forme se fait par usinage mécanique, notamment par fraisage sur un outillage adapté, selon une gamme assurant un état de surface compatible avec la qualité du rechargement recherchée.

On procède ensuite au nettoyage de la surface de soudage destinée à recevoir le métal d'apport, à la fois mécaniquement et chimiquement. Ce nettoyage est adapté au matériau du substrat. Cela est important pour l'alliage de titane Ti17 en particulier ou l'alliage TA6V.

On procède au rechargement d'une éprouvette de début de campagne. Les figures 2a et 2b montrent une éprouvette 10 correspondant au rechargement d'un sommet de pale. Cette éprouvette, en forme de plaque rectangulaire d'épaisseur constante et de longueur par exemple de 40 mm, présente des caractéristiques communes avec la zone à réparer :
elle est de préférence constituée du même matériau,
elle a les mêmes caractéristiques de surface, géométriques, thermiques et métallurgiques.

On voit en profil sur la figure 2b, un bord de la plaque dont la géométrie est la même que celle du sommet de pale après usinage en zone à réparer. Ce sommet comprend une partie de forme incurvée 12 et une partie 14 représentant la base de la léchette d'étanchéité à l'amorce du rayonnage. L'épaisseur est celle du sommet de pale.

Les figures 3a et 3b montrent une éprouvette pour la réparation d'un coin de bord d'attaque ou de fuite de pale. L'éprouvette 20 est en forme de plaque rectangulaire d'épaisseur constante. La plaque a été découpée selon le profil 22 qui est le même que celui de la zone à réparer après usinage du coin de sommet de pale. Le profil comprend une partie rectiligne 22a près du sommet de la pale et parallèle au bord d'attaque ou de fuite. La partie rectiligne 22a se prolonge par une partie incurvée 22b se terminant sur le bord d'attaque ou de fuite. L'éprouvette 20 présente un premier talon intégré 24 qui est représentatif du raccordement de la partie 22b au bord d'attaque ou de fuite de la pale et un deuxième talon 26 qui est représentatif du raccordement de la partie 22a au sommet de pale.

On a représenté sur la figure 4, une buse 30 de rechargement par faisceau laser. Cette buse comprend des canaux d'alimentation en poudre de métal à déposer sur la zone à réparer suivant l'axe de propagation du faisceau laser. Le faisceau est dirigé vers la pièce et la poudre de métal M est entraînée par un flux de gaz G sur la zone chauffée par le faisceau.

La buse se déplace le long de la zone à réparer dans un mouvement de va et vient construisant progressivement un empilement de couches de matière déposée et mise en fusion par le faisceau laser. Le rechargement est effectué à vitesse et intensité constantes même si l'épaisseur sur la pièce varie.

Les paramètres sont adaptés pour limiter notamment les déformations internes et le réusinage, ainsi que l'étendue de la zone affectée thermiquement (zat). Les paramètres à prendre en compte pour le rechargement sont :
la hauteur du point de focalisation du faisceau laser (de préférence un laser YAG) par rapport à la surface,
la vitesse d'avance de la tête 30,
l'énergie appliquée par le faisceau.
la poudre utilisée (Ti17 ou TA6V) qui n'est pas nécessairement du même métal que le substrat, sa granulométrie, de préférence entre 30 et 100 µm ; son point de focalisation,
la nature du gaz d'entraînement et de confinement, de préférence hélium ou argon.

On a défini au préalable le type de buse à utiliser. La vitesse et l'énergie sont liées au type de machine mis en oeuvre.

En particulier, dans le cas du titane Ti17, pour éviter l'apparition de porosités dans la masse, on a constaté que la variation des paramètres ne devait pas dépasser +ou - 5%.

On procède à un contrôle visuel sur la continuité des dépôts de couches, l'épaisseur de celles-ci, leur largeur. On cherche à détecter des traces d'oxydation qui seraient dues à une mauvaise protection par le gaz de confinement, les manques de liaison, les criques (au binoculaire) et les infondus.

Lorsque le rechargement de l'éprouvette a été considéré comme bon, on valide les paramètres de la machine. On s'autorise une variation de 5%.

On passe alors à la réparation des zones à recharger sur la pièce ou les pièces le cas échéant. On répare toutes les zones préparées qui portent sur le même type de zone et qui correspond à celui de l'éprouvette.

On procède à un simple contrôle visuel de la zone rechargée. En effet il n'est pas possible de mettre en oeuvre des techniques de contrôle qui sont destructifs ou bien qui exigent un espace important, non disponible sur un DAM.

On réalise l'éprouvette de fin de campagne, dans les mêmes conditions de soudage que les étapes précédentes de façon à obtenir un résultat représentatif de la réparation effectuée sur les aubes du DAM.

Le contrôle effectué sur l'éprouvette de fin de campagne permet de valider ou non la réparation pour le DAM considéré. Ce contrôle comprend une expertise métallographique à la recherche de soufflures qui sont des cavités formées par le gaz dégagé par le métal. Dans le cas du titane Ti17 les micro soufflures peuvent être aussi petites que de 5 µm à 100 µm et ne sont pas détectables par une simple radiographie. La densité de micro porosités observées lors de l'expertise métallographique sera déterminante pour l'acceptation de la réparation.

Le rechargement ainsi terminé, les opérations de traitement thermique et de reprise par usinage viennent achever la réparation. Ces opérations sont conventionnelles.

Il est à noter que des attentions particulières lors du traitement thermique sont à prendre en compte pour ne pas générer de contaminations.

L'invention porte aussi sur la validation d'une installation de soudage par faisceau laser pour la mise en oeuvre du procédé de réparation par rechargement. En effet, avant de mettre une machine en service et de la dédier à la réparation de DAM par rechargement, il est nécessaire de procéder à une campagne de mise au point des paramètres de soudage.

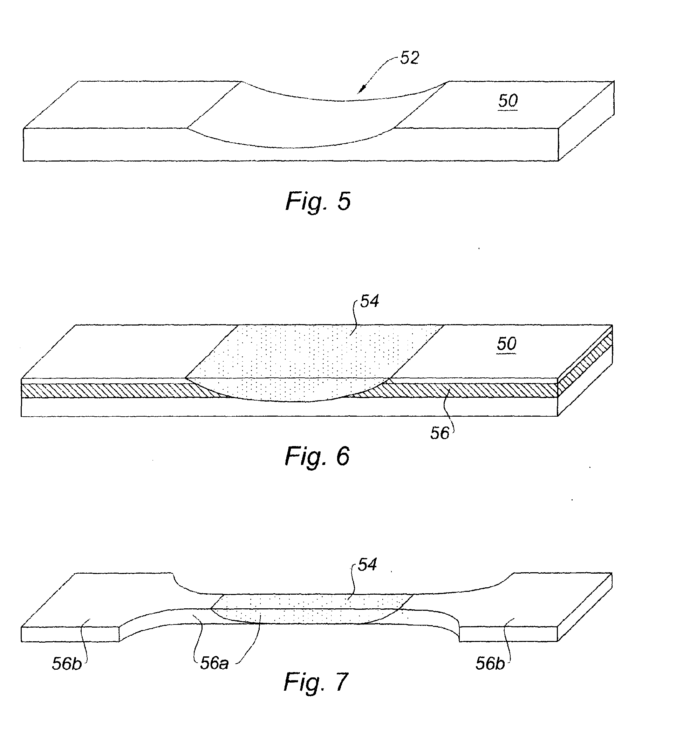

Conformément à une autre caractéristique de l'invention, on procède à cette mise au point en réalisant des essais sur des éprouvettes dites de mise au point. Ces éprouvettes 50 représentées sur les figures 5 à 7 permettent
de contrôler visuellement l'existence de non oxydation et de mesurer la géométrie du rechargement,
d'évaluer la qualité métallurgique de rechargement après usinage, sans et avec traitement thermique, par des contrôles non destructifs et destructifs, tels que le ressuage et les coupes micrographiques,
de caractériser le matériau Ti17 rechargé laser, après usinage et traitement thermique, en tenue mécanique c'est-à-dire en procédant à des essais de fatigue cyclique (HCF).

On utilise de préférence un barreau issu d'une ébauche forgée de DAM, car il présente alors un sens de fibrage de même nature que les DAM qui seront réparés avec une telle installation.

On procède au rechargement d'un barreau parallélépipédique 50 sur lequel on a creusé une empreinte 52 dont la géométrie du profil correspond à une cavité que l'on creuse dans une zone endommagée du bord d'attaque ou du bord de fuite d'une pale pour former une zone à réparer. Le barreau est plus large qu'une pale. On procède au rechargement de cette empreinte 52 au moyen de la machine que l'on souhaite valider. En raison de la largeur du barreau, on effectue le rechargement en croisant les différentes couches. Lorsque le rechargement est fini comme cela est représenté sur la figure 6, avec éventuellement quelques débordements considérés sans conséquence, on découpe une tranche 56 du barreau. Cette tranche 56, représentée hachurée sur la figure 6 englobe la partie rechargée 54. La figure 7 montre cette tranche 56 que l'on a usinée pour obtenir une partie centrale 56a formant une barre incorporant la zone rechargée. Dans sa partie médiane, toute l'épaisseur de la barre 56a est constituée de matière rechargée. De part et d'autre de la barre 56a des pattes plus larges 56b, forment des pattes de préhension pour les mâchoires des appareils avec lesquels on pratique les essais de fatigue cyclique.

Lorsque les essais sur les éprouvettes de mise au point sont satisfaisants, on considère que la mise au point de l'installation est achevée. On peut alors procéder à la campagne de réparation de DAM. Entre deux campagnes de réparation de DAM, il n'est pas nécessaire de procéder à une campagne de mise au point de l'installation. Il suffit de vérifier que les éprouvettes de début et de fin de campagne donnent des résultats de rechargement satisfaisant.

## Revendications

1. Procédé de réparation d'un disque aubagé monobloc de turbomachine comportant au moins une zone endommagée, par rechargement en métal de ladite zone endommagée au moyen d'une machine de rechargement par apport de matière, comprenant les étapes de préparation de la zone endommagée, de rechargement en métal de la zone, et de reprise de la zone réparée, **caractérisé par le fait que**,
l'étape de préparation comprend l'usinage de la zone endommagée de manière à obtenir une zone à réparer de profil déterminé,
on procède au rechargement d'une éprouvette, dite de début de campagne, comportant le profil déterminé, avec la machine de rechargement qui est une machine à faisceau laser et dont les paramètres de fonctionnement sont préétablis,
on vérifie la qualité de l'éprouvette après rechargement, et dans l'hypothèse où la qualité de l'éprouvette correspond aux critères de réception,
on recharge la zone à réparer avec la même machine sans en changer les paramètres de fonctionnement,

2. Procédé selon la revendication 1, comprenant, après rechargement de la zone à réparer, une étape de rechargement d'une éprouvette dite de fin de campagne identique à la première éprouvette dite de début de campagne, et de vérification de la qualité de l'éprouvette de fin de campagne.

3. Procédé selon la revendication 1 ou 2 dont le métal constituant le disque est un alliage de titane, notamment le Ti 17 ou le TA6V.

4. Procédé selon la revendication précédente dont le métal de rechargement est un alliage de titane, notamment le Ti17 ou le TA6V.

5. Procédé selon la revendication 1, dont la zone endommagée est située sur un sommet de pale.

6. Procédé selon la revendication 1 dont la zone endommagée est un coin de bord d'attaque ou un coin de bord de fuite de pale.

7. Procédé selon la revendication 1 dont la zone endommagée est située en bord d'attaque ou en bord de fuite de pale.

8. Procédé selon l'une des revendications précédentes, dont l'étape de rechargement est effectuée par fusion d'un métal d'apport par un faisceau laser.

9. Procédé l'une des revendications précédentes dont le disque comporte au moins deux zones endommagées, on répare lesdites deux zones après traitement de l'éprouvette de début de campagne.

10. Procédé de réparation de disque aubagé monobloc selon l'une des revendications précédentes comprenant une étape de mise au point de l'installation de rechargement au cours de laquelle les paramètres sont préétablis, par rechargement d'une éprouvette de mise au point et suivis de contrôles non destructifs et/ou destructifs de la qualité du rechargement.

11. Procédé selon la revendication précédente dont l'éprouvette présente un profil de zone à recharger de bord d'attaque ou de bord de fuite de pale dudit disque.

12. Procédé selon la revendication précédente dont le contrôle comprend un essai de fatigue sur une éprouvette d'essai usinée dans l'éprouvette après l'étape de rechargement.

13. Procédé selon la revendication 10 selon lequel l'éprouvette de mise au point est façonnée dans une ébauche forgée de DAM

14. Éprouvette (10) de début ou fin de campagne pour la mise en oeuvre du procédé selon les revendications 1 et 4, constituée en alliage de titane dont la forme simule le sommet d'une pale avec léchette d'étanchéité.

15. Eprouvette (20) de début ou de fin de campagne pour la mise en oeuvre du procédé selon les revendications 1 et 5, constituée en alliage de titane dont la forme simule un coin de bord d'attaque ou de bord de fuite d'un sommet de pale usiné selon ledit profil prédéterminé.

## Claims

1. Method of repairing a turbomachine one-piece bladed disc or blisk having at least one damaged zone, by build-up of metal in said damaged zone by means of a build-up welding machine, which comprises the steps of preparing the damaged zone, of building up the zone with metal and of rework of the repaired zone, **characterized in that**:
- the preparation step comprises the machining of the damaged zone so as to obtain a zone of defined profile to be repaired;
- the build-up welding operation is carried out on a test piece, called start-of-run test piece, having said defined profile, using a build-up welding machine, which is a laser-type machine and the operating parameters of which are preset;
- the quality of the test piece after build-up welding is checked; and, if the quality of the test piece corresponds to the acceptance criteria,
- the zone to be repaired is built up using the same machine without changing the operating parameters thereof.

2. Method according to Claim 1, which comprises, after the zone to be repaired has been build-up welded, a step of build-up welding what is called an end-of-run test piece identical to the start-of-run first test piece, and a step of checking the quality of the end-of-run test piece.

3. Method according to Claim 1 or 2, in which the constituent metal of the disc is a titanium alloy, especially Ti17 or TA6V.

4. Method according to the preceding claim, in which the build-up weld metal is a titanium alloy, especially Ti17 or TA6V.

5. Method according to Claim 1, in which the damaged zone is located on an aerofoil tip.

6. Method according to Claim 1, in which the damaged zone is a leading-edge corner or trailing-edge corner of an aerofoil.

7. Method according to Claim 1, in which the damaged zone is located on the leading edge or trailing edge of an aerofoil.

8. Method according to one of the preceding claims, in which the build-up welding step is carried out by melting a filler metal by a laser beam.

9. Method according to one of the preceding claims, in which the disc has at least two damaged zones, said two zones being repaired after treatment of the start-of-run test piece.

10. Method of repairing a one-piece bladed disc according to one of the preceding claims, which includes a step of regulating the build-up welding installation, during which step the parameters are preset, by build-up welding a regulating test piece, followed by non-destructive and/or destructive tests for checking the quality of the build-up weld.

11. Method according to the preceding claim, in which the test piece has a profile of a zone to be build-up welded of a leading edge or trailing edge of an aerofoil of said disc.

12. Method according to the preceding claim, in which the inspection includes a fatigue test carried out on a test specimen machined from the test piece after the build-up welding step.

13. Method according to Claim 10, in which the regulating test piece is cut from a forged blisk blank.

14. Start-of run (10) or end-of-run test piece for implementing the method according to Claims 1 and 4, made of a titanium alloy, the shape of which simulates the tip of an aerofoil with a sealing lip.

15. Start-of-run (10) or end-of-run test piece for implementing the method according to Claims 1 and 5, made of a titanium alloy, the shape of which simulates a leading-edge or trailing-edge corner of an aerofoil tip machined according to said predetermined model.

## Patentansprüche

1. Verfahren zur Reparatur einer in einem Stück gefertigten beschaufelten Turbomaschinenscheibe, die mindestens einen beschädigten Bereich aufweist, durch Wiederauffüllen dieses beschädigten Bereichs mit Metall mittels einer Maschine zum Auffüllen durch Auftragen von Werkstoff, bestehend aus den Verfahrensschritten der Vorbereitung des beschädigten Bereichs, des Auffüllens des beschädigten Bereichs mit Metall und der Wiederherstellung des ursprünglichen Zustands des beschädigten Bereichs,
**dadurch gekennzeichnet,**
**dass** der Verfahrensschritt der Vorbereitung aus der Bearbeitung des beschädigten Bereichs dergestalt besteht, dass ein zu reparierender Bereich mit einem bestimmten Profil erzielt wird,
**dass** ein Auffüllen eines Probestücks, eines so genannten Erstprobestücks, das das bestimmte Profil aufweist, erfolgt, und zwar mit der Maschine zum Auffüllen, die eine Laserstrahlmaschine ist und deren Betriebsparameter vorab eingestellt sind,
**dass** die Qualität des Probestücks nach dem Auffüllen überprüft wird, und, falls die Qualität des Probestücks den Abnahmekriterien entspricht,
**dass** der zu reparierende Bereich mit der gleichen Maschine aufgefüllt wird, ohne deren Betriebsparameter zu verändern.

2. Verfahren nach Anspruch 1, das nach dem Wiederauffüllen des zu reparierenden Bereichs einen Verfahrensschritt des Auffüllens eines Probestücks, eines so genannten Endprobestücks, das dem ersten Probestück, dem so genannten Erstprobestück, gleicht, sowie einen Verfahrensschritt der Überprüfung der Qualität des Endprobestücks umfasst.

3. Verfahren nach Anspruch 1 oder 2, wobei das die Scheibe bildende Metall eine Titanlegierung ist, insbesondere Ti17 oder TA6V.

4. Verfahren nach dem vorherigen Anspruch, wobei das die Füllung bildende Metall eine Titanlegierung ist, insbesondere Ti17 oder TA6V.

5. Verfahren nach Anspruch 1, wobei sich der beschädigte Bereich an einer Schaufelblatt-Spitze befindet.

6. Verfahren nach Anspruch 1, wobei der beschädigte Bereich eine Ecke an der Vorderkante oder eine Ecke an der Hinterkante des Schaufelblatts ist.

7. Verfahren nach Anspruch 1, wobei sich der beschädigte Bereich an der Vorderkante oder an der Hinterkante des Schaufelblatts befindet.

8. Verfahren nach einem der vorherigen Ansprüche, wobei der Verfahrensschritt des Auffüllens durch Schmelzen eines Auftragmetalls mittels eines Laserstrahls erfolgt.

9. Verfahren nach einem der vorherigen Ansprüche, wobei die Scheibe mindestens zwei beschädigte Bereiche aufweist und diese beiden Bereiche nach Bearbeitung des Erstprobestücks repariert werden.

10. Verfahren zur Reparatur einer in einem Stück gefertigten beschaufelten Scheibe nach einem der vorherigen Ansprüche, das einen Verfahrensschritt des Einstellens der Auffüllanlage umfasst, bei dem die Parameter durch Auffüllen eines Einstell-Probestücks voreingestellt werden und daraufhin zerstörungsfreie und/oder zerstörende Qualitätsprüfungen an der Füllung erfolgen.

11. Verfahren nach dem vorherigen Anspruch, wobei das Probestück ein Profil des aufzufüllenden Bereichs der Vorderkante oder der Hinterkante des Schaufelblatts dieser Scheibe aufweist.

12. Verfahren nach dem vorherigen Anspruch, wobei die Prüfung einen Ermüdungsversuch an einem Versuchsprobestück umfasst, das nach dem Verfahrensschritt des Auffüllens durch Bearbeitung des Probestücks gewonnen wird.

13. Verfahren nach Anspruch 10, bei dem das Einstell-Probestück aus einem geschmiedeten Rohling einer in einem Stück gefertigten beschaufelten Scheibe geformt wird.

14. Erst- oder Endprobestück (10) für die Durchführung des Verfahrens nach den Ansprüchen 1 und 4, das aus einer Titanlegierung besteht und dessen Form die Spitze eines Schaufelblatts mit Dichtungsscheibe simuliert.

15. Erst- oder Endprobestück (20) für die Durchführung des Verfahrens nach den Ansprüchen 1 und 5, das aus einer Titanlegierung besteht und dessen Form eine Ecke an der Vorderkante oder an der Hinterkante einer Schaufelblattspitze simuliert, die gemäß dem vorbestimmten Profil gefertigt ist.
